# EUROPEAN PATENT SPECIFICATION

(11) **EP 1 790 782 B1**
(45) Date of publication and mention of the grant of the patent: **07.08.2013**
(21) Application number: 06124588.2
(22) Date of filing: 22.11.2006
(51) Int. Cl.: F16K 31/20, E03D 1/32, F16K 31/08, F16K 31/385, F16K 31/18, F16K 31/06

(54) **Water level control valve comprising a paramagnetic shutter**
Ventil zur Niveauregelung von Wasser mit paramagnetischem Schliesselements
Vanne de régulation de niveau d'eau comportant un obturateur paramagnétique

(30) Priority: 23.11.2005 IT VI20050308
(43) Date of publication of application: 30.05.2007
(73) Proprietor: Innoplast S.r.L., 37019 Peschiera del Garda VR (IT)
(72) Inventor: Lonardi, Giuseppe, 37069 Villafranca di Verona (VR) (IT); Zarantonello, Aldo, 25010 Desenzano del Garda (BS) (IT)
(74) Representative: Bonini, Ercole

(56) References cited:
- WO-A-92/21906
- DE-A1- 3 927 611
- FR-A1- 2 692 300
- GB-A- 820 955
- GB-A- 2 103 391
- JP-A- 1 234 672
- JP-A- 6 207 684

## Description

The invention concerns a unit for intercepting water flows in WC cisterns according to the preamble of claim 1.

It is known that WCs are provided with cisterns that can be external or embedded in the wall and all containing a unit for intercepting the water flow connected to a water conveying pipe coming from a water supply network.

The intercepting unit allows the cistern to be filled with water up to a predefined maximum level through an outlet way connected to a water delivery pipe; once the maximum water level has been reached, the water flow is interrupted.

Successively, when the water is discharged into the WC, the intercepting unit starts operating to fill the cistern again.

The units for intercepting the water flow in WC cisterns carried out according to the known art, though in different specific individual embodiments, all substantially comprise an on-off valve positioned between the water conveying pipe and the water delivery pipe that delivers the water into the cistern.

In most of the embodiments, the on-off valve is provided with a shutter having at one end a seal capable of mechanically closing the conveying pipe.

Said valve is provided with shutter control means operated by a floating element immersed in water inside the cistern.

When the user empties the cistern, the floating element moves downward displacing the shutter, which opens the conveying pipe in such a way as to fill the cistern again.

During the filling stage, the floating element moves gradually upwards until reaching the predefined maximum level, at which point it closes the conveying pipe by means of a rod.

In this type of intercepting units, the closure of the conveying pipe is obtained by exploiting the force developed by the movement of the floating element that operates the shutter, which interrupts the water conveying route, as described. Clearly, the force necessary to displace the shutter to close the conveying pipe is obtained thanks to the force developed by the floating element connected to the end of the rod.

Said intercepting units, though accomplishing the aim to regulate the flow of water into the cisterns, pose some acknowledged drawbacks.

One of these drawbacks lies in that said units do not allow the shutter to rapidly intercept the flow of water, since the floating element, which controls the displacement of the shutter, moves slowly inside the cistern.

Said slow intercepting action produces an annoying noise that may be disturbing.

A further acknowledged drawback is represented by the fact that the seal positioned at the end of the shutter can wear out due to the stress to which it is subjected, and consequently, after a certain period of operation, does not guarantee perfect tightness.

It is evident that in this case the consequent leakage of water generates a further annoying noise produced by the intercepting unit, as well as an unjustified consumption of water.

A further acknowledged drawback, connected to the previous one, is represented by the need to perform frequent maintenance in order to ensure that the water conveying pipe is correctly intercepted, avoiding the leakage described, when the water in the cistern has reached the maximum filling level. In order to eliminate the drawbacks mentioned above, according to one known embodiment of an intercepting unit, the on-off valve comprises a connection chamber between the conveying pipe and the delivery pipe, as well as an elastic membrane that closes the connection ways between the connection chamber, the conveying pipe and the delivery pipe.

Therefore, the membrane intercepts the water flow in two different points.

It is provided with a pair of holes, the first one of which levels the pressure between the conveying pipe and the connection chamber, while the second can be closed by a shutter and when it is open levels the pressure between the connection chamber and the delivery pipe.

Said shutter is made of a paramagnetic material and is slidingly associated with control means constituted by a magnetic body that in turn is associated with a rod which has a floating element attached to its free end.

The shutter is provided at one end with a sealing element for closing the second hole on the membrane, and at the opposite end with a spring.

When the cistern is full of water, the rotation of the rod around a pin, caused by the high position of the floating element, forces the magnetic body to move away from the shutter, freeing it from the effect of the magnetic field and allowing the spring to thrust said shutter so that it closes the central hole of the membrane and to push the latter so that it closes the connection ways between the connection chamber, the conveying pipe and the delivery pipe.

While the cistern is being emptied, the floating element moves downward and forces the rod to rotate around the pin, thus making the magnetic body move upwards and get nearer to the shutter.

The magnetic field of the body attracts the shutter, winning the force of the spring and thus causing the shutter to move away from the second hole on the membrane.

This allows the membrane to move from the closing position and the water flow to pass from the conveying pipe to the delivery pipe through the connection chamber.

This embodiment, though allowing the flow of water to be quickly intercepted, has some acknowledged drawbacks.

The first one of these drawbacks lies in that the control means are particularly cumbersome.

A further drawback is represented by the fact that when the pressure of the water present in the conveying pipe is high the magnetic body does not always succeed in moving the shutter away from the closing position. In fact, the first hole levels the pressure between the connection chamber and the conveying pipe, so that in order to move the shutter the magnetic body must win the force of the spring and also that of water pressure inside the chamber.

If this pressure, though remaining within the limits prescribed by law, is too high, the magnetic field produced by the magnetic body is not sufficient to win the opposing action of the pressure and the spring summed together. Embodiments similar to the previous ones are described in patents FR 2692300, DE 3927611 *and* GB 2 103 391, where the displacement of the magnetic body is obtained through the displacement of a rod arranged coaxial to said magnetic body, to the shutter and to the floating element.

Said embodiments, though allowing the overall dimensions of the intercepting unit to be reduced, still pose the drawbacks due to the presence of the spring and consequently to the fact that it is difficult for the magnetic body to move the shutter.

In particular, the magnetic body must be rather large and the water pressure in the conveying pipe must in any case be limited.

WO 92/21906 *shows another known type of valve, in which there is no spring acting on the shutter.* This document is regarded as being the closest prior art for claim 1, and it is pointed out that this document discloses the features described in the preamble of claim 1.

*Also known in the general field of the valves are those described in* GB 820955 *and* JP 06207684*, which are not intercepting water flow valves and are given only as examples of art related to the present invention.*

The aim of the present invention is to overcome all the drawbacks described. It is a first aim of the invention to construct a unit for intercepting and regulating the water flow in WC cisterns that allows the water flow to be quickly intercepted.

It is a further aim of the invention to construct a unit for intercepting and regulating the water flow in WC cisterns that is capable of intercepting the flow independently of the water pressure in the conveying pipe, with no need to provide a magnetic body capable of inducing a particularly high magnetic field. Another aim of the present invention is to construct an intercepting unit that is particularly compact.

A further aim of the invention is to construct an intercepting unit that does not require frequent maintenance due to scale deposits on the intercepting members.

The aims mentioned above have been achieved through the construction of a unit for intercepting the flow of water in WC cisterns according to claim 1.

The coaxial arrangement of the control means and the rod makes it possible to obtain a particularly compact intercepting unit.

Still to advantage, thanks to the presence of the magnetic control means, the force required to operate the shutter and to open/close the on-off valve is very limited, and consequently also the floating element is smaller than those present in the known intercepting units mentioned above, which makes the intercepting unit that is the subject of the invention even more compact.

Still to advantage, the use of a magnetic body in combination with a shutter in paramagnetic material makes it easier for the intercepting unit to intercept the water flow to the cistern.

Still to advantage, the use of the magnetic body only to control the shutter reduces the forces that oppose the action of the magnetic body on the shutter itself, thus allowing the magnetic body to move the shutter independently of the water pressure in the conveying pipe, said pressure being in any case within the limits prescribed by law.

The aims and advantages described above will be highlighted in greater detail in the descriptions of preferred embodiments of the invention that are supplied as indicative, non-limiting examples with reference to the enclosed drawings, wherein:
- Figure 1 shows an axonometric view of the intercepting unit that is the subject of the invention;
- Figure 2 shows the intercepting unit that is the subject of the invention during operation;
- Figure 3 shows a cross section of the intercepting unit of Figure 1;
- Figure 4 shows an exploded axonometric view of the intercepting unit of Figure 1;
- Figure 5 is a cross section view of the intercepting unit of Figure 1 in operating position;
- Figure 6 is a cross section view of the intercepting unit of Figure 1 in a different operating position.

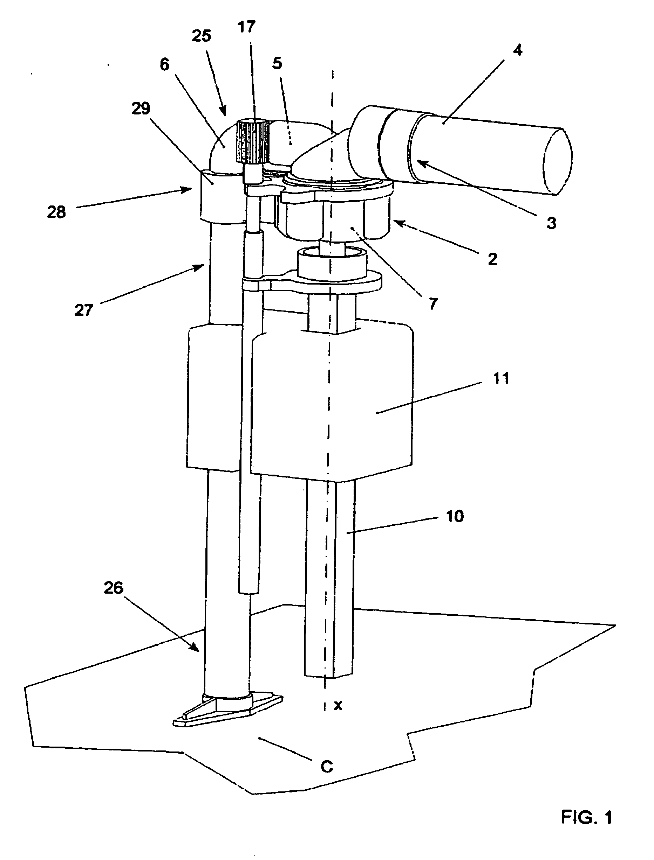

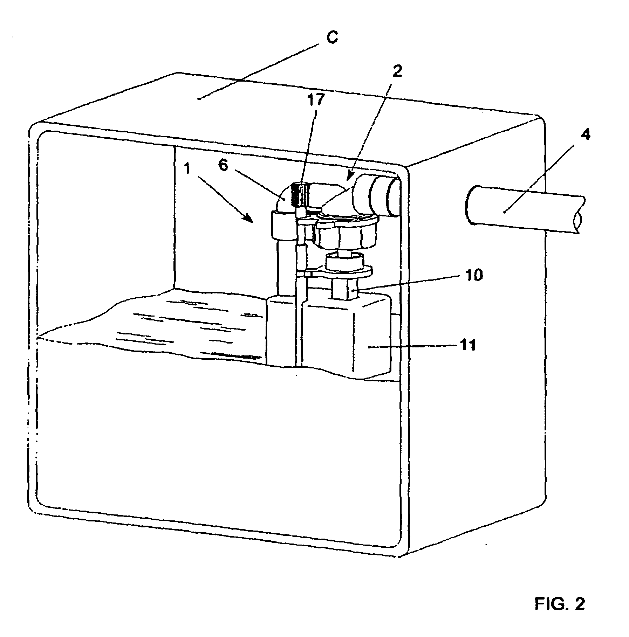

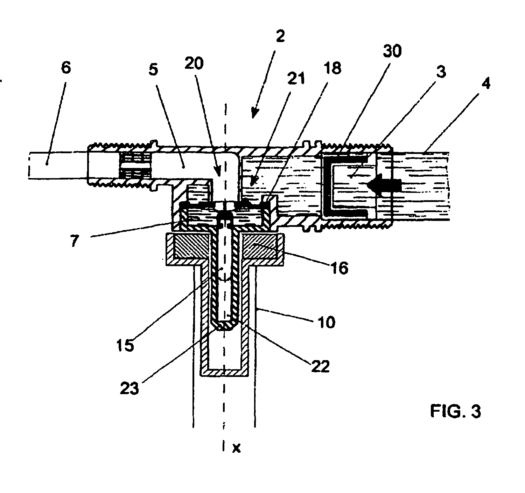

The unit for intercepting the flow of water in WC cisterns that is the subject of the invention is shown in Figures 1 and 2, where it is indicated as a whole by **1.** It comprises, as can be seen also in the detail of Figure 3, one on-off valve **2** having an inlet way **3** connected to a pipe **4** for conveying the water coming from a water supply network, an outlet way **5** connected to a pipe **6** for delivering water into the cistern **C**, and a connection chamber **7** suited to place said inlet way **3** in communication with said outlet way **5**.

The on-off valve is equipped with magnetically-operated means **8** for controlling the water flow between the inlet way **3** and the outlet way **5**, comprising at least one rod **10** provided with a floating element **11.**

The control means **8** are arranged coaxial to the longitudinal axis **X** defined by the rod **10**.

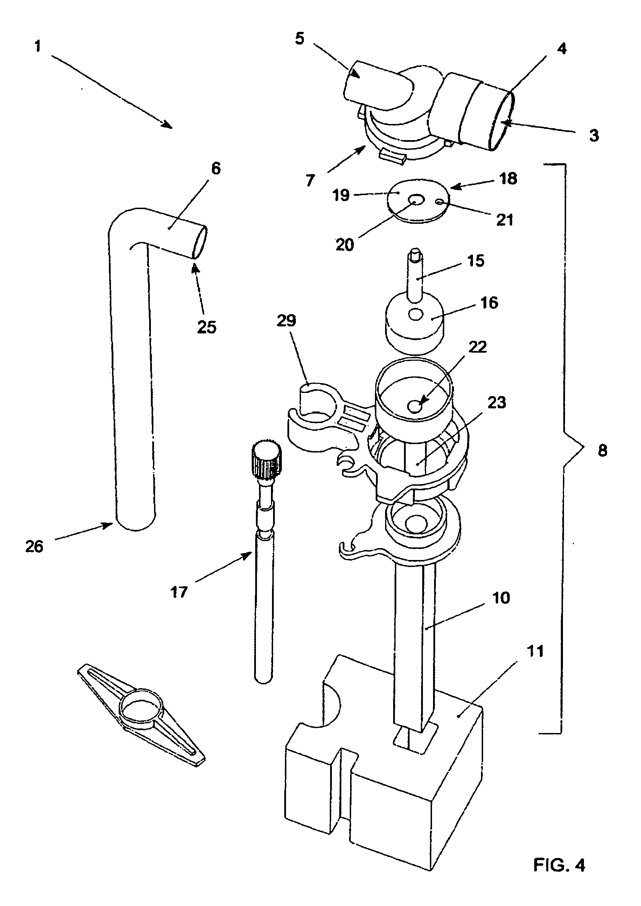

According to the invention, the control means **8** comprise the following, as shown in Figures 3 and 4:
- a shutter **15** made of a paramagnetic material and cooperating with the outlet way **5** in the opening and closing stages;
- a magnetic body **16** arranged outside the shutter **15** and mechanically associated with the rod **10**.

In particular, the magnetic body **16** is arranged at the level of the shutter **15,** at least when the shutter **15** cooperates with the outlet way **5** during the closing stage.

Such an embodiment allows the shutter **15** to be operated directly, through the magnetic body **16,** avoiding the use of elastic bodies or springs.

This advantageously makes it possible to use a magnetic body **16** with reduced dimensions and to operate with certainty the intercepting unit **1** independently of the water pressure inside the conveying pipe **4**, since the magnetic body **16** must oppose only the action of said pressure and not the force exerted by additional springs.

According to the preferred embodiment of the invention described herein, the longitudinal axis **X** of the rod **10** is vertical.

The floating element **11** is arranged in such a way as to envelop a section of the rod **10** and it is associated with means **17** for adjusting its position along the rod **10** itself with respect to the on-off valve **2.**

The on-off valve **2** comprises an elastic membrane **18** for intercepting the flow between the inlet way **3** and the outlet way **5**.

Said elastic membrane **18** comprises a rubber circular body **19** positioned in the connection chamber **7,** in which it is possible to identify a central hole **20** that is closed by the shutter **15** and that places the connection chamber **7** in communication with the outlet way **5**, and a peripheral hole **21** that places the connection chamber **7** in communication with the inlet way **3**.

The shutter **15** is slidingly coupled into a seat **22** associated with the on-off valve **2**.

In particular, the seat **22** consists of a hollow cylindrical body **23** closed at one end and housed inside the magnetic body **16** constituted by a substantially toroidal permanent magnet.

The delivery pipe **6** is provided with a first end **25** associated with the outlet way **5** of the on-off valve **2**, and the second end **26** fixed to the bottom of the cistern **C**.

The delivery pipe **6** is also associated, at an intermediate point **27,** with the on-off valve **2** through constraining means **28** constituted, according to the preferred embodiment of the invention described herein, by an open ring **29** arranged in such a way as to envelop the delivery pipe **6** and carried out so as to make up a single body with the on-off valve **2**.

As can be observed in the figures and according to the above description, the preferred embodiment of the invention has the shutter and the magnetic body arranged below the on-off valve.

Furthermore, the magnetic body is directly moved by the rod equipped with floating element.

According to a different embodiment of the invention, the shutter and the magnetic body can be arranged above the on-off valve.

In this case, the magnetic body and the rod are mechanically associated through the interposition of lever means that properly move the shutter following the vertical movements of the rod.

This embodiment advantageously makes it possible for the delivery pipe to coincide with the rod, thus reducing even more the dimensions of the intercepting unit.

Finally, the intercepting unit 1 of the invention also comprises a water filter **30** positioned in the inlet way **3** in order to filter the water coming from the conveying pipe **4**.

In practice, when the water contained in the cistern **C** is discharged into the WC, the floating element **11**, arranged in such a way as to envelop the rod **10**, is not pushed by the water and moves downwards.

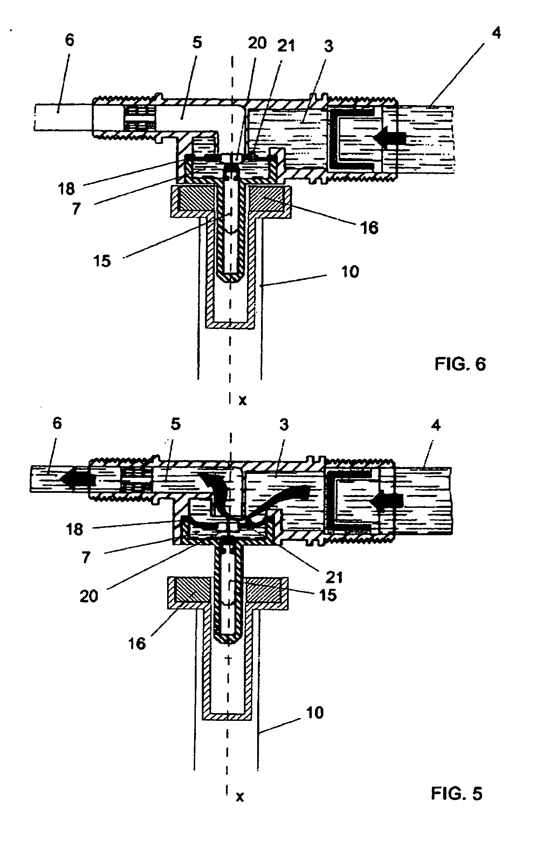

The displacement of the floating element **11** generates a corresponding displacement of the rod **10** that, consequently, moves the magnetic body **16,** as shown in Figure 5, along the same vertical axis **X**, thus recalling the shutter **15** through the magnetic field generated by it.

Consequently, the central hole **20** of the elastic membrane **18** is freed and consequently the elastic membrane **18** is deformed during movement and allows the water to flow between the inlet way **3** and the outlet way **5** thanks to the difference in pressure produced between the are upstream of the membrane **18** and the area downstream of the membrane **18**.

During the successive filling of the cistern, the floating element **11** gradually moves upwards and consequently the magnetic body **16** moves upward displacing the shutter **15** in the same direction.

In particular, when the floating element **11** reaches the maximum filling level in the cistern **C**, the shutter **15**, as shown in Figure 6, is pushed by the magnetic body **16** in such a way as to close the central hole **20** of the membrane **18**.

In this condition, the pressures downstream and upstream of the elastic membrane **18** are balanced thanks to the second hole **21** made in the elastic membrane **18** that consequently recovers its deformation and thus interrupts the water flow to the delivery pipe **6**.

It is therefore clear, according to the above description, that the intercepting unit carried out according to the invention achieves all the aims set.

In particular, thanks to the direct control of the magnetic body on the shutter with no addition of further means, like for example elastic means, the invention achieves the aim to carry out a unit for intercepting and regulating the flow of water to WC cisterns that makes it possible to rapidly intercept the water flow independently of the water pressure in the conveying duct, with pressure values that in any case are within the limits prescribed by law.

The aim to carry out an intercepting unit that is particularly compact compared to the equivalent intercepting units belonging to the known art has also been achieved.

Finally, the aim to carry out an intercepting unit that is particularly simple and with few components in order to reduce the frequency of maintenance compared to equivalent intercepting units belonging to the known art has been achieved.

In the construction stage, variants of the intercepting unit that is the subject of the invention may be produced.

Said construction variants must all be considered protected by the present patent, provided that they fall within the scope of the claims expressed below.

In the cases where the technical characteristics illustrated in the claims are followed by references, these have been added only with the aim to facilitate the comprehension of the claims themselves and therefore said references do not have any limiting effect on the degree of protection to be granted to each element they identify only by way of example.

## Claims

1. Unit for intercepting the water flow in WC cisterns, of the type comprising:
- at least one on-off valve having an inlet way connected to a pipe for conveying the water coming from a water supply network, an outlet way connected to a pipe for delivering water into said cistern, and a connection chamber suited to place said inlet way in communication with said outlet way;
- magnetically-operated means for controlling the water flow between said inlet way and said outlet way, comprising at least one rod provided with at least one floating element, said control means being arranged coaxial to a vertical longitudinal axis (X) defined by said rod, wherein said control means further comprise:
- a shutter, suited to cooperate with said outlet way in the opening and closing stage;
- at least one magnetic body arranged outside said shutter and mechanically associated with said rod;
- adjusting means for connecting said floating element to said rod in such a way as to allow adjusting the position of said floating element along said rod and with respect to said on-off valve;
said magnetic body being arranged at the level of said shutter, at least when said shutter cooperates with said outlet way during the closing stage,
**characterised in that**
- the shutter is made of a paramagnetic material;
- the magnetic body is mechanically associated with said rod in such a way that said magnetic body is directly moved by said rod; and
- the adjusting means are means for fixedly connecting said floating element to said rod in such a way as to allow adjusting the position of said floating element along said rod and with respect to said on-off valve.

2. Intercepting unit (1) according to claim 1), **characterized in that** said floating element (11) is arranged in such a way as to envelop at least one section of said rod (10).

3. Intercepting unit (1) according to claim 1), **characterized in that** said on-off valve (2) comprises an elastic membrane (18) for intercepting the flow between said inlet way (3) and said outlet way (5).

4. Intercepting unit (1) according to claim *3*), **characterized in that** said elastic membrane (18) comprises a rubber circular body (19) arranged in the connection chamber (7), in which it is possible to identify:
- a central hole (20), suited to be closed by said shutter (15) and to place said connection chamber (7) in communication with said outlet way (5);
- a peripheral hole (21), suited to place said connection chamber (7) in communication with said inlet way (3).

5. Intercepting unit (1) according to claim 1), **characterized in that** said shutter (15) is slidingly coupled in a seat (22) associated with said on-off valve (2).

6. Intercepting unit (1) according to claim *5*), **characterized in that** said seat (22) is constituted by a hollow cylindrical body (23) closed at least at one end.

7. Intercepting unit (1) according to claim *6*), **characterized in that** said magnetic body (16) comprises a permanent magnet substantially toroidal in shape, suited to house said hollow cylindrical body (23).

8. Intercepting unit (1) according to claim 1), **characterized in that** it comprises a water filter (30) for the water coming from said conveying pipe (4), positioned in said inlet way (3).

9. Intercepting unit (1) according to claim 1), **characterized in that** said pipe (6) for delivering water to said cistern (C) has a first end (25) associated with said outlet way (5) of said on-off valve (2), and the second end (26) fixed to the bottom of said cistern (C).

10. Intercepting unit (1) according to claim *9*), **characterized in that** said delivery pipe (6) is associated, at an intermediate point (27), with said on-off valve (2) through constraining means (28).

11. Intercepting unit (1) according to claim *10*), **characterized in that** said constraining means (28) are constituted by an open ring (29) arranged in such a way as to envelop said delivery pipe (6) and structured so as to form a single body with said on-off valve (2).

12. Intercepting unit according to claim *1*), **characterized in that** said shutter and said magnetic body are positioned above said on-off valve, said magnetic body and said rod being mechanically associated through the interposition of lever means.

13. Intercepting unit according to claim *12*)*,* **characterized in that** said delivery pipe and said rod coincide.

## Patentansprüche

1. Einheit zur Absperrung des Wasserflusses in WC-Kästen, des Typs, der Folgendes enthält:
- wenigstens ein On/Off-Ventil mit einem Eingang, der an eine Zuleitung für das aus einer Wasserleitung kommende Wasser angeschlossen ist, einem Ausgang, der an eine Druckleitung zur Einleitung des Wassers in den besagten Kasten angeschlossen ist, und eine Verbindungskammer, die geeignet ist, den besagten Eingang mit dem besagten Ausgang in Kommunikation zu versetzen;
- magnetisch betriebene Mittel zur Kontrolle des Wasserflusses zwischen besagtem Eingang und besagtem Ausgang, wenigstens eine Stange mit wenigstens einem schwimmenden Element umfassend, wobei diese Kontrollmittel koaxial zu einer durch besagte Stange definierten, senkrechten Längsachse (X) angeordnet sind, und wobei besagte Kontrollmittel des Weiteren Folgendes umfassen:
- einen Verschluss, dazu geeignet, in der Öffnungs- und Schließphase mit besagtem Ausgang zusammenzuarbeiten;
- wenigstens einen, außerhalb von besagtem Verschluss positionierten und mechanisch besagter Stange zugeordneten magnetischen Körper;
- Reguliermittel zur Verbindung besagten, schwimmenden Elements mit besagter Stange, so dass die Korrektur der Position besagten schwimmenden Elements entlang besagter Stange und bezüglich besagten On/Off-Ventils möglich ist;
wobei sich besagter magnetischer Körper wenigstens, wenn besagter Verschluss während der Schließphase mit besagtem Ausgang zusammenarbeitet, auf Ebene besagten Verschlusses befindet,
**dadurch gekennzeichnet, dass**
- der Verschluss aus paramagnetischem Material besteht;
- der magnetische Körper mechanisch der Stange zugeordnet ist, so dass besagter magnetische Körper unmittelbar durch besagte Stange bewegt wird; und
- die Reguliermittel Mittel zur festen Verbindung besagten schwimmenden Elements an besagter Stange sind, so dass die Korrektur der Position besagten schwimmenden Elements entlang besagter Stange und bezüglich besagten On/Off-Ventils möglich ist.

2. Absperreinheit (1) gemäß Patentanspruch 1), **dadurch gekennzeichnet, dass** das besagte schwimmende Element (11) so angeordnet ist, dass es wenigstens einen Bereich der besagten Stange (10) umgibt.

3. Absperreinheit (1) gemäß Patentanspruch 1), **dadurch gekennzeichnet, dass** das On/Off-Ventil (2) eine elastische Membran (18) zur Absperrung des Flusses zwischen dem Eingang (3) und dem Ausgang (5) umfasst.

4. Absperreinheit (1) gemäß Patentanspruch 3), **dadurch gekennzeichnet, dass** die elastische Membran (18) einen kreisförmigen Körper (19) aus Gummi umfasst, der in der Verbindungskammer (7) positioniert ist und an dem Folgendes erkennbar ist:
- ein zentrales Loch (20), dazu geeignet, durch den besagten Verschluss (15) geschlossen zu werden und die besagte Verbindungskammer (7) mit dem besagten Ausgang (5) in Kommunikation zu versetzen;
- ein peripheres Loch (21), dazu geeignet, die besagte Verbindungskammer (7) mit dem besagten Eingang (3) in Kommunikation zu versetzen.

5. Absperreinheit (1) gemäß Patentanspruch 1), **dadurch gekennzeichnet, dass** der besagte Verschluss (15) gleitend in einer Aufnahme (22) gekuppelt ist, welche dem besagten On/Off-Ventil (2) zugeordnet ist.

6. Absperreinheit (1) gemäß Patentanspruch 5), **dadurch gekennzeichnet, dass** die besagte Aufnahme (22) aus einem zylindrischen Hohlkörper (23) besteht, der an wenigstens einem Ende geschlossen ist.

7. Absperreinheit (1) gemäß Patentanspruch 6), **dadurch gekennzeichnet, dass** der besagte magnetische Körper (16) einen im Wesentlichen ringförmigen Dauermagneten umfasst, der geeignet ist, in seinem Inneren den besagten zylindrischen Hohlkörper (23) aufzunehmen.

8. Absperreinheit (1) gemäß Patentanspruch 1), **dadurch gekennzeichnet, dass** sie einen Wasserfilter (30) für das aus der besagten Zuleitung (4) kommende Wasser umfasst, der in dem besagten Eingang (3) positioniert ist.

9. Absperreinheit (1) gemäß Patentanspruch 1), **dadurch gekennzeichnet, dass** die besagte Leitung (6) zur Einleitung des Wassers in den besagten Kasten (C) ein erstes Ende (25) aufweist, das dem besagten Ausgang (5) des besagten On/Off-Ventils (2) zugeordnet ist, und das zweite Ende (26) am Boden des besagten Kastens (C) befestigt ist.

10. Absperreinheit (1) gemäß Patentanspruch 9), **dadurch gekennzeichnet, dass** die besagte Druckleitung (6) an einem Zwischenpunkt (27) durch Fixiermittel (28) dem besagten On/Off-Ventil (2) zugeordnet ist.

11. Absperreinheit (1) gemäß Patentanspruch 10), **dadurch gekennzeichnet, dass** die besagten Fixiermittel (28) aus einem offenen Ring (29) bestehen, der die besagte Druckleitung (6) umgebend angeordnet ist und mit dem besagten On/Off-Ventil (2) eine Einheit bildet.

12. Absperreinheit gemäß Patentanspruch 1), **dadurch gekennzeichnet, dass** der besagte Verschluss und der besagte magnetische Körper über dem besagten On/Off-Ventil positioniert sind, wobei der besagte magnetische Körper und die besagte Stange einander mechanisch durch zwischengefügte Hebelmittel zugeordnet sind.

13. Absperreinheit gemäß Patentanspruch 12), **dadurch gekennzeichnet, dass** die besagten Druckleitung und die besagte Stange zusammenfallen.

## Revendications

1. Groupe d'interception du flux d'eau dans des réservoirs WC du type comprenant:
- au moins une soupape d'interception ayant une voie d'entrée reliée à un conduit d'adduction d'eau dérivant d'un réseau d'alimentation d'eau, une voie de sortie reliée à un conduit de refoulement d'eau audit réservoir et une chambre de raccordement apte à mettre ladite voie d'entrée en communication avec ladite voie de sortie;
- des moyens de contrôle du flux d'eau entre ladite voie d'entrée et ladite voie de sortie à activation magnétique, comprenant au moins une tige dotée d'au moins un élément flottant, lesdits moyens de contrôle étant disposés coaxialement à l'axe longitudinal (X) défini par ladite tige, où lesdits moyens de contrôle comprennent également:
- un obturateur apte à coopérer avec ladite voie de sortie en phase d'ouverture et de fermeture;
- au moins un corps magnétique disposé extérieurement audit obturateur et associé mécaniquement à ladite tige;
- des moyens de réglage pour la connexion dudit élément flottant à ladite tige de façon à permettre le réglage de la position dudit élément flottant le long de ladite tige et par rapport à ladite soupape d'interception;
ledit corps magnétique étant disposé au niveau dudit obturateur, au moins quand ledit obturateur coopère avec ladite voie de sortie durant la phase de fermeture,
**caractérisé en ce que**
- l'obturateur est réalisé en matériau paramagnétique;
- le corps magnétique est associé mécaniquement à ladite tige de façon à ce que ledit corps magnétique soit déplacé directement par ladite tige; et
- les moyens de réglage sont des moyens pour relier de manière fixe ledit élément flottant à ladite tige de façon à permettre de régler la position dudit élément flottant le long de ladite tige par rapport à ladite soupape d'interception.

2. Groupe d'interception (1) selon la revendication 1), **caractérisé en ce que** ledit élément flottant (11) est disposé de manière à envelopper au moins une partie de ladite tige (10).

3. Groupe d'interception (1) selon la revendication 1), **caractérisé en ce que** ladite soupape d'interception (2) comprend une membrane élastique (18) d'interception du flux entre ladite voie d'entrée (3) et ladite voie de sortie (5).

4. Groupe d'interception (1) selon la revendication 3), **caractérisé en ce que** ladite membrane élastique (18) comprend un corps circulaire (19) en caoutchouc disposé dans la chambre de raccordement (7), dans lequel il est possible d'identifier:
- un trou central (20), apte à être fermé par ledit obturateur (15) et à mettre ladite chambre de raccordement (7) en communication avec ladite voie de sortie (5);
- un trou périphérique (21), apte à mettre ladite chambre de raccordement (7) en communication avec ladite voie d'entrée (3).

5. Groupe d'interception (1) selon la revendication 1), **caractérisé en ce que** ledit obturateur (15) est accouplé de manière coulissante dans un siège (22) associée à ladite soupape d'interception (2).

6. Groupe d'interception (1) selon la revendication 5), **caractérisé en ce que** ledit siège (22) est constitué par un corps cylindrique creux (23) fermé à au moins une extrémité.

7. Groupe d'interception (1) selon la revendication 6), **caractérisé en ce que** ledit corps magnétique (16) comprend un aimant permanent ayant une forme essentiellement toroïdale, apte à accueillir dans son intérieur ledit corps cylindrique creux (23).

8. Groupe d'interception (1) selon la revendication 1), **caractérisé en ce qu'**il comprend un filtre (30) de l'eau dérivant dudit conduit d'adduction (4), disposé dans ladite voie d'entrée (3).

9. Groupe d'interception (1) selon la revendication 1), **caractérisé en ce que** ledit conduit de refoulement (6) d'eau audit réservoir (C) présente une première extrémité (25) associée à ladite voie de sortie (5) de ladite soupape d'interception (2), et la deuxième extrémité (26) fixée au fond dudit réservoir (C).

10. Groupe d'interception (1) selon la revendication 9), **caractérisé en ce que** ledit conduit de refoulement (6) est associé, dans un point intermédiaire (27), à ladite soupape d'interception (2) par des moyens de liaison (28).

11. Groupe d'interception (1) selon la revendication 10), **caractérisé en ce que** lesdits moyens de liaison (28) sont constitués par un anneau ouvert (29) disposé de manière à envelopper ledit conduit de refoulement (6) et structuré de façon à former un corps unique avec ladite soupape d'interception (2).

12. Groupe d'interception selon la revendication 1), **caractérisé en ce que** ledit obturateur et ledit corps magnétique sont disposés supérieurement à ladite soupape d'interception, ledit corps magnétique et ladite tige étant mécaniquement associés par l'interposition de systèmes de leviers.

13. Groupe d'interception selon la revendication 12), **caractérisé en ce que** ledit conduit de refoulement et ladite tige coïncident.
